# EUROPÄISCHE PATENTSCHRIFT

(11) **EP 2 543 630 B1**
(45) Veröffentlichungstag und Bekanntmachung des Hinweises auf die Patenterteilung: **13.11.2013**
(21) Anmeldenummer: 12171414.1
(22) Anmeldetag: 11.06.2012
(51) Int. Cl.: C01B 17/02

(54) **Verwendung von hydrophilen organo modifizierten Siloxanen als Prozesshilfsmittel für die Schmelzengranulierung**
Use of hydrophilic organo-modified siloxanes as process aid for melt granulation
Utilisation de siloxanes modifiées organiques hydrophiles comme auxiliaire de traitement pour la granulation d'une fusion

(30) Priorität: 05.07.2011 DE 102011078624
(43) Veröffentlichungstag der Anmeldung: 09.01.2013
(73) Patentinhaber: Evonik Degussa GmbH, 45128 Essen (DE)
(72) Erfinder: Haensel, Rene, 46282 Dorsten (DE); Giessler-Blank, Sabine, Dr., 44227 Dortmund (DE); Kempka, Stefan, 45355 Essen (DE)

(56) Entgegenhaltungen:
- GB-A- 1 536 694
- GB-A- 1 537 888

## Beschreibung

Die vorliegende Erfindung ist gerichtet auf die Verwendung von organomodifizierten Polysiloxanen, die mindestens drei voneinander verschiedene Polyetherreste aufweisen, wobei sich mindestens zwei dieser Polyetherreste in ihrem Anteil an Ethylenoxid-Einheiten an dem Gesamtgewicht des Polyetherrests um mindestens 9 Massen-% unterscheiden, als Trennmittel oder Trennmittelbestandteil in einem Verfahren der Schmelzgranulierung.

In vielen chemisch industriellen Prozessen fallen Schmelzen an. In großen Mengen entsteht z.B. in Raffinerien flüssiger Schwefel aus dem sogenannten Clauss - Prozess. Es sind heute verschiedene Prozesse verfügbar, die die flüssige Schmelze in eine handhabbare und feste Form bringen. Die geschmolzenen Produkte werden dabei mit einer Aufgabevorrichtung, in geeignete Formen wie Kugeln, Schuppen, Pastillen oder andere Formen, vorzugsweise gleichmäßige Formen, bevorzugt gleichförmige möglichst kugelförmige Formen gebracht (Kühlbandanlagen). Bei den häufig kontinuierlichen Prozessen, achtet die Industrie insbesondere auf Sauberkeit der Fördereinrichtungen, welche vorzugsweise Stahlförderbänder sind, und gute Trennung der Formkörper von den Fördereinrichtungen, damit der Prozess dauerhaft kontinuierlich ablaufen kann. Ferner werden gute Dosierbarkeit der Produkte und kostengünstiges und sauberes Verpacken der Produkte gefordert. Insbesondere eine gleichbleibende Form und Größe der Formkörper, dies setzt eine gute Trennung der Produkte von den Förderbändern voraus, ist wichtig, damit diese Produkte später weitertransportierbar und genau dosierbar sind. Weist die Form der Schmelzgranulate Ecken und Kanten auf, so können diese brechen und insbesondere bei der Schwefelpelletierung dadurch Stäube hervorrufen. Weiterhin sind derartige Körper unerwünscht, da diese sich in Folgeprozessen nicht genau dosieren lassen.

Bei dieser Verfestigung der Schmelzen sind Stahlbandkühler eine häufig eingesetzte Technologie. Hierbei wird die Schmelze kontinuierlich gekühlt und verfestigt. Durch unterschiedliche Technologien können die verschiedensten Formen bestimmter Größe geformt werden. Dabei sind Lochplatten eine ältere Technologie (vergleiche Aufbereitungstechnik 1970 Nr. 5, S. 278). Hierbei wird eine Schwefelschmelze aus dem Clauss - Prozess durch eine oder mehrere Lochplatten in einen mit Wasser gefüllten Prillbehälter geführt (US-PS 3 637 361).

In DE-OS 2928401 wird ein Verfahren zur Pelletierung von Schwefel beschrieben, bei dem geschmolzener Schwefel auf einen Metallträger gebracht und bis zur Verfestigung abgekühlt wird, wobei vor dem Aufbringen des geschmolzenen Schwefels auf den Metallträger eine Zusammensetzung aufgebracht wird, die Lösemittel, organisches Titanat und carboxyfunktionelle Siloxane aufweist.

Eine heute weitverbreitete Technologie ist die Verfestigung von Schwefelschmelzen mittels Stahlbandkühler und dem sogenannten Rotoformer^{®} (Rotoform System), wie sie z.B. von Sandvik Process Systems angeboten wird. Dabei wird der geschmolzene Schwefel mit einer Temperatur von 125°C bis 145°C einem Rotoformer^{®} zugeführt und durch diesen in Tropfenform gleichmäßig auf ein Stahlband aufgegeben, dessen Unterseite z. B. mittels Sprühdüsen durch Wasser gekühlt wird oder durch ein Wasserbad geleitet wird. Auch in diesem Prozess wird auf eine gute Trennung der Formkörper und gleichmäßige, möglichst kugelförmige Form der Schmelzgranulate geachtet. Das Prinzip dieser Verfahren wird z. B. in US 6398989 und US 4279579 sowie in den Broschüren "Sandvik - Ihr Partner in der Schmelzengranulierung", PS-442/GER 10.2003 un d "Sandvik Process Systems - Ihr Partner in industrieller Verfahrenstechnik", PS-400 GER 2.2011 jeweils herausgegeben durch die Sandvik-Gruppe (www.smt.sandvik.com) beschrieben.

Insbesondere beim Granulieren von Schwefel mit den verschiedenen Verfahren zur Herstellung von bestimmten Schmelzgranulaten, wie z.B. Pastillen, müssen Trennmittel eingesetzt werden, um das mögliche Anhaften an Stahlbändern oder anderer Fördereinrichtungen zu verhindern. Außerdem beeinflussen die Trennmittel positiv die Form der Schmelzgranulate, was eine anschließende Verpackung und Wiederverwendung (genaue Dosierung) verbessert. Ein häufig eingesetztes Trennmittel ist z.B. Silikonöl. In GB 1 537 888 wird der Einsatz von Silikonölen der Viskosität 20 - 50 cSt von z. B. Dow Coming beschrieben. Dieses Fluid wird unter dem Handelsnamen DOW CORNING^{®} 200 FLUID, 20 cSt. vertrieben. Das Trennmittel wird dabei im geschmolzenen Schwefel dispergiert und vereinfacht die Pelletierung, die auf einem gekühlten Stahlband erfolgt. Ein Nachteil dieser Technologie besteht darin, dass das Silikonöl hierzu im Schwefel eindispergiert werden muss. Da das Silikonöl eine völlig mit Wasser, welches zum Kühlen und Reinigen der Stahlbänder eingesetzt wird, unverträgliche Flüssigkeit ist, kommt es zu Verschmutzungen und schmierigen Rückständen in der Anlage, die die Trennung der Formkörper vom Stahlbandkühler negativ beeinflussen. Eine Verbesserung konnte mit dem Einsatz von Silikonölemulsionen erreicht werden. Die Applikation der Emulsion durch Sprühen oder auch Tauchen der Stahlbänder erleichtert den Prozess, jedoch sind anhaftende Silikonrückstände auf den Bändern nicht mehr re-emulgierbar und führen deshalb auch zu Verschmutzungen. Ein weiterer Nachteil der Emulsionen ist ihre Stabilität. Separation des Silikonöls von der wässrigen Phase tritt häufig schon bei 35 °C ein, was deren Einsatz in Raffinerien in warmen Ländern erschwert, da das Silikonöl häufig schon im Lager- oder Vorratsbehältern oder in Fördereinrichtungen separiert.

Der Nachteil der bisher eingesetzten Produkte konnte durch den Einsatz von hydrophilen organisch modifizierten Siloxanen reduziert werden. Ein häufig z.B. auch von der Fa. Sandvik eingesetztes Produkt ist das von der Evonik Goldschmidt GmbH vertriebene Tegopren^{®} 5863. Dieses ist wasserlöslich, und an der Siloxankette mit zwei Polyethern unterschiedlicher Molmasse modifiziert, welche beide den gleichen Massengehalt an Ethylenoxid, von ca. 40% Ethylenoxid und ca. 60% Propylenoxid haben. Das Produkt wird in wässriger Lösung appliziert, die Nachteile der Emulsionsstabilität bei höherer Temperatur fallen weg. Ein Nachteil dieser Produktklasse ist jedoch, dass die gute Trennung der Schmelzgranulate nicht konstant bleibt, sondern in Abhängigkeit der Zeit etwas schwerer wird.

Ferner kann die Form der Schmelzgranulate leicht von der optimalen Kugelform abweichen. Es werden gewölbte Schmelzgranulate erhalten, von denen flachere Formkörper die beschriebenen Probleme des Abbrechens der dünneren Kanten und Dosierprobleme verursachen.

Der verfestigte Schwefel wird häufig zwischen Produktion und Wiederverwendung bewegt (Transport, Lagerung, Handhabung etc.) so dass geringe Staubentwicklung und gering Bruchanfälligkeit bevorzugt ist.

Aufgabe der vorliegenden Erfindung war deshalb die Bereitstellung von Trennmitteln zur Verwendung in einem Verfahren zur Erzeugung von Schwefel-Partikel, die einen oder mehrere der Nachteile des Standes der Technik vermeiden.

Insbesondere bestand die Aufgabe der vorliegenden Erfindung in der Bereitstellung einer sehr gut wasserlöslichen, trennenden Komponente, die für eine sehr gute dauerhafte Trennung der Schwefelgranulate sorgt und auch auf Dauer nicht auf dem Stahlband Rückstände liefert, die die Trennung oder den Prozessablauf negativ beeinflussen. Vorzugsweise sollten die Schmelzgranulate gleichmäßige, möglichst kugelförmige Formen ergeben, die somit keine fragilen Kanten aufweisen.

Überrachenderweise wurde gefunden, dass organo-modifizierte Polysiloxane wie in Anspruch 1 definiert diese Aufgabe lösen. Die organo-modifizierten Polysiloxane adsorbieren auf den Schwefelgranulaten und sorgen so für eine sehr gute Trennung der Schmelzgranulate.

Die erfindungsgemäße Verwendung hat den Vorteil, dass auf dem Stahlband keinerlei Rückstände verbleiben. Die Erfindung hat weiterhin den Vorteil, dass die Schmelzgranulate eine gleichmäßige kugelförmige Form oder zumindest "Hamburger"-förmige Form aufweisen, und somit keine Kanten oder flache, fragile Bereiche besitzen, die bei der Weiterverarbeitung/dem Verpacken brechen können. Stäube und unregelmäßig geformte Körper werden somit vermieden und ein sauberer Verarbeitungsprozess und ein genaueres Dosieren der Schmelzgranulate ermöglicht.

Ein weiterer Vorteil der vorliegenden Erfindung besteht darin, dass durch die Wasserlöslichkeit der organomodifizierten Polysiloxane die Anwendung und Reinigung der Granulierapparaturen erheblich vereinfacht wird. Durch die Wasserlöslichkeit wird außerdem erreicht, dass das Trennmittel in nahezu beliebiger Dicke auf dem Stahlband appliziert werden kann, in dem die Konzentration des organomodifizierten Polysiloxans in der wässrigen Lösung und die Menge der als Trennmittel auf das Stahlband aufgebrachten Lösung variiert wird.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Werden in der vorliegenden Erfindung chemischen (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar. Bei Prozentangaben handelt es sich, wenn nicht anders angegeben, um Angaben in Gewichtsprozent. Sind nachfolgend Messwerte angegeben, so sind diese Messungen, wenn nicht anders angegeben bei Normalbedingungen (25 °C und 1013 mbar) durchgeführt worden. Werden nachfolgend Mittelwerte angegeben, so handelt es sich, wenn nicht anderes angegeben, um Gewichtsmittel.

Die Begriffe Schmelzgranulat, Granulat und Pellet werden im Rahmen der vorliegenden Erfindung als Synonyme Begriffe verstanden. Auch Briketts sollen im Rahmen der vorliegenden Erfindung als Granulat bzw. granulare Materie verstanden werden. Die Begriffe Schmelzgranulierung, Schmelzengranulierung, Schmelzpelletierung und Schmelzenpelletierung sollen im Rahmen der vorliegenden Erfindung nachfolgend durch den Sammelbegriff Schmelzgranulierung abgedeckt sein.

Die erfindungsgemäße Verwendung zeichnet sich dadurch aus, dass organomodifizierte Polysiloxane der Formel (I) 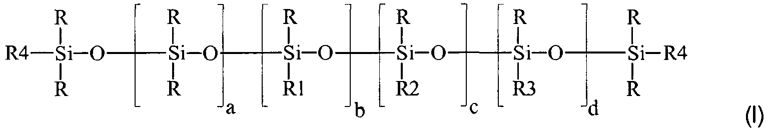 wobei
- N =: a + b + c + d + 2 = 20 bis 210, bevorzugt 30 bis 100, insbesondere 40 - 60
- a =: 15 bis 205, bevorzugt 35 bis 45,
- b =: 1 bis 12, bevorzugt 1 bis 8, insbesondere 2 bis 6
- c =: 1 bis 12, bevorzugt 1 bis 8, insbesondere 2 bis 6
- d =: 1 bis 12, bevorzugt 1 bis 8, insbesondere 2 bis 6
sind,
die Reste R unabhängig voneinander gleiche oder verschiedene, aliphatische oder aromatische Kohlenwasserstoffreste mit 1 bis 10 C-Atomen sind, vorzugsweise Methylreste,
die Reste R4 unabhängig voneinander gleiche oder verschiedene Reste R, R1, R2 oder R3 sind,
die Reste R1, R2 und R3 unabhängig voneinander verschiedene Polyetherreste der allgemeinen Formel (II) sind 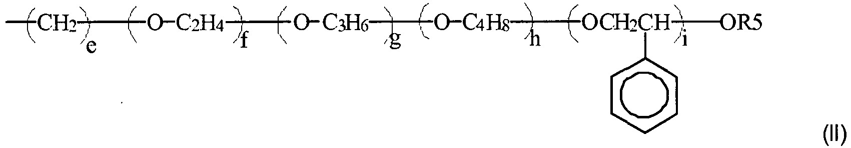 mit
- e: 3 bis 11, vorzugsweise 3,
- f: 6 bis 30, vorzugsweise 10 bis 30,
- g: 0 bis 15, vorzugsweise 0 bis 10,
- h: 0 bis 5, vorzugsweise 0,
- i: 0 bis 5, vorzugsweise 0,
- R5: unabhängig voneinander gleich oder verschieden und bedeuten Methyl-, Acetyl- oder Wasserstoffrest, bevorzugt Wasserstoff- oder Methylrest, besonders bevorzugt Wasserstoffrest, vorzugsweise mit den Maßgaben, dass das Molekulargewicht des Polyetherrests der Formel (II) größer als 200 g/mol, vorzugsweise von größer 400 g/mol bis 2000 g/mol und der Anteil an Ethylenoxid größer als 45 Massen % im Polyether ist, und sich mindestens zwei dieser Polyetherreste in ihrem Anteil an Ethylenoxid-Einheiten an dem Gesamtgewicht des Polyetherrests um mindestens 9 Massen-% unterscheiden, wobei vorzugsweise der Massen-prozentuale Anteil an Ethylenoxid im Polyetherrest R2 mindestens 9 Massen% größer als der prozentuale Anteil an Ethylenoxid im Polyetherrest R1 jeweils bezogen auf die Polyetherreste der Formel (II) ist,
wobei die Reste der Formel (11) jeweils statistisch, gradientenartig oder blockartig aufgebaut sein können, als Trennmittel oder Trennmittelbestandteil in der Schmelzgranulierung eingesetzt werden.

In Formel (II) stehen die mit dem Index g gekennzeichneten Einheiten für solche die aus Proyplenoxid hervorgegangen sind, die mit dem Index h gekennzeichneten Einheiten für solche die aus Butylenoxid hervorgegangen sind und die mit dem Index i gekennzeichneten Einheiten für solche die aus Styroloxid hervorgegangen sind

Bei den Indices a bis d und e bis i kann es sich natürliche ganze Zahlen oder um gewichtsmittlere Mittelwerte handeln. Vorzugsweise sind die Indices gewichtsmittlere Mittelwerte.

Die erfindungsgemäßen organo-modifizierten Polysiloxane können z. B. durch Hydrosilylierung aus den entsprechenden ungesättigten Polyethern und den entsprechenden SiH-funktionellen Siloxanen erhalten werden. Das vorzugsweise verwendete Verfahren zur Herstellung der erfindungsgemäßen organo-modifizierten Polysiloxane ist eine Übergangsmetall-katalysierte Hydrosilylierung der olefinisch ungesättigten Polyether mit SiH-funktionellen Polysiloxanen unter Ausbildung von Si-C-Verknüpfungen, wie sie z. B. EP in 1 520 870, EP 1439200, EP 1544235, US 4,147,847, US 4,025,456, EP 0493836 oder US 4,855,379 und den darin zitierten Dokumenten beschrieben wird. Vorzugsweise wird ein Platinkatalysator zur Katalyse der Hydrosilylierung eingesetzt.

Die Herstellung der verwendeten ungesättigten Polyether, auf denen die Reste der Formel (II) basieren, bevorzugt Allylpolyether kann ebenfalls nach dem bekannten Stand der Technik erfolgen. So ist zum Beispiel in EP 1 360 223 und den darin zitierten Dokumenten die Herstellung von olefinischen Polyethern mit und ohne Derivatisierung der OH-Funktionalität beschrieben. In US 5877268 (und US 5856369) wird die Herstellung von Allyl-gestarteten Polyethern mit DMC-Katalyse beschrieben. DE 19940797 beschreibt die Herstellung und Verwendung von Polyalkylenoxiden unter Verwendung von Kaliummethanolat als Katalysator. Weitere Verfahren werden in US 3957843, US 4059605, US 3507923, DE 102005001076 und DE 3121929 beschrieben.

Vorzugsweise erfolgt die Herstellung der Polyether durch Umsetzung eines Startalkohols, der bevorzugt Allylalkohol ist, mit Ethylenoxid und/oder Propylenoxid. Die Polymerisation der Alkylenoxide kann rein oder in belieben Mischungen durchgeführt werden. Die Reihenfolge der Anlagerungsschritte kann beliebig erfolgen, so dass je nach vorgehensweise statistisch, blockartig oder gradientenartig ungesättigte Polyether erhalten werden.

Die Herstellung eines erfindungsgemäßen verwandten organo modifizierten Siloxans kann z. B. wie folgt erfolgen: Eine Mischung aus 28 Gew.-% SiH-funktionellem Polydimethylsiloxan (mit N = ca. 50 und 0,27 Gew.-% Wasserstoff) wird vorgelegt. Dazu gibt man 22,5 Gew.-% eines mit Allylalkohol gestarteten Copolymers, enthaltend 48 Gew.-% Ethylenoxideinheiten und 46 Gew.-% Propylenoxideinheiten, hergestellt nach dem Stand der Technik durch eine KOH-katalysierte Umsetzung. Ferner werden 36 Gew.-% eines mit Allylalkohol gestarteten Copoylmers, enthaltend 73 Gew.-% Ethylenoxideinheiten und 24 Gew.-% Propylenoxideinheiten dazugegeben und 13,5 Gew.-% eines mit Allylalkohol gestarteten Copolymers, enthaltend 91 Gew.-% Ethylenoxid dazugegeben. Unter Rühren wird auf 90°C aufgeheizt. Es werden 5 ppm Platin in Form eines Platin-Katalysators zugegeben. Die Umsatzkontrolle durch Bestimmung des SiH-Werts (gasvolumetrische Bestimmung) ergibt nach 5 h 99,5 % SiH-Umsatz.

Die erfindungsgemäßen Verbindungen der Formel (I) können selbst als Trennmittel oder aber als Trennmittelbestandteil eines Trennmittels eingesetzt werden. Werden die Verbindungen der Formel (I) als Trennmittelbestandteil eingesetzt, so ist das eingesetzte Trennmittel vorzugsweise eine Mischung oder Lösung der organomodifizierten Polysiloxane der Formel (I) in einem Lösemittel. Das Lösemittel kann Wasser oder ein organisches Lösemittel, insbesondere ein Alkohol, bevorzugt Ethanol sein. Besonders bevorzugt werden die organomodifizierten Polysiloxane der Formel (I) in Form von wässrigen Lösungen verwendet. Die als Trennmittel eingesetzten wässrigen Lösungen weisen vorzugsweise von 0,5 bis 50 Gew.-%, bevorzugt von 1 bis 25 Gew.-%, und ganz besonders bevorzugt von 3 bis 18 Gew.-% an organomodifizierten Polysiloxanen der Formel (I) auf.

Die eingesetzten organomodifizierten Polysiloxane der Formel (I) weisen vorzugsweise einen Trübungspunkt von 30 bis 70 °C, bevorzugt 35°C bis 60°C auf. Der Trübungspunkt wird vorzugsweise in Anlehnung an DIN EN 1890 bestimmt. Von den dort angegeben Verfahren wird vorzugsweise jenes eingesetzt, bei dem 1 g Probe mit 100 g Wasser vermessen werden. Eine entsprechend angesetzte Lösung wird in einem Reagenzglas/Becherglas erwärmt bis eine deutliche Trübung eintritt. Beim Abkühlen an Luft unter Umrühren mit dem Thermometer wird die Temperatur bestimmt, bei der die Lösung klar bzw. nur noch leicht opalescent ist.

Als mögliche zu granulierende Stoffe können z. B. die auf Seite 18 der Broschüre "Sandvik - Ihr Partner in der Schmelzengranulierung", PS-442/GER 10.2003 eingesetzt werden. Bevorzugte Stoffe sind insbesondere ausgewählt aus Alkansulfonat, Aluminiumsulfat, Ammoniumnitrat, Ammoniumphosphat, Anthrazen, Antioxydantien, Antiozonant, Asphalt, Benzoesäure, Bishydroxyäthyl-terephthalat (BHET), Bisphenol A, Bitumen, Caprolactam, Carbazol, Crotonsäure, Diaminodiphenylmethan (DMA), Emulgatoren, Fettchemikalien, Fotogelatine, Harnstoff, Harze, wie z. B. Acrylharz, Colophonium, Epoxidharz, Kohlenwasserstoffharz, Phenolharz, Polyamidharz, Polyesterharz, Siliconharz, Tallölharz, Calciumstearat, Kobaltnaphthenat, Kobaltstearat, Lactam 12, Fette, Kakaomasse, Käse, Schokolade, Gelatine, Kaugummigrundmasse, Saucen, Suppenkonzentrate, Masterbatche, Naphthalin, Natriumacetat, Neopentylglykol (NPG), Paradichlorbenzol, Pech, Pestizide, Polyäthylenglykol, Polyäthylenterephthalat (PET), Polystyrol, Polyvinylacetat, Pulverlacke, PVC-Additive, PVC-Stabilisilatoren, Reinigungsmittel, Seife, synthetisch, Schmelzkleber, z. B. auf der Basis von Äthylenvinylacetat, Polyurethan, Polyamid oder Polyester, reaktiver Schmelzkleber, Schwefel, Schwefel + Bentonit, Sorbitol, Stabilisatoren, Stearinsäure, Tenside, Toluoldiisocyanat (TDI), Triazol (BTA,TTA), Trimellithanhydrid (TMA), Triphenylphosphat (TPP), Unterkühlende Schmelzen, UV-Stabilisatoren, Wachse, wie z. B. Paraffin, AKD-Wachs, Mikrowachs, PE-Wachs, PP-Wachs, Bienenwachs, Gefülltes Wachs, Duftwachs, Wachsfarben, Montanwachs oder Beschichtungswachs, Waschmittelzusätze, Zinknitrat oder Zinkstearat. Ganz besonders bevorzugt ist die erfindungsgemäße Verwendung beim Einsatz von Schwefel als zu granulierendem Stoff.

Durch die bevorzugte Verwendung eines Trennmittels/organomodifizierten Polysiloxans gemäß Formel (I) bewirkt die Schwefelschmelzetemperatur von > 125°C die Separation der organomodifizierten Polysiloxane durch Verdampfen des Wassers. In der näheren Umgebung der heißen Schwefelschmelze fallen die organomodifizierten Polysiloxane aufgrund des Trübungspunktes von bevorzugt im Bereich von 30 bis 70 °C aus der wässrigen Lösung aus und adsorbieren auf den Oberflächen des Schwefels und des Stahlbandes in äußerst dünnen Schichten und sorgen für die Trennung der Granulate und beeinflussen die Form der Schmelzgranulate derart, dass diese vorzugsweise eine kugelartige Form aufweisen und somit auch den geringsten Kontakt zur Oberfläche des Stahlbandes haben.

Die Schmelzgranulierung erfolgt vorzugsweise wie in US 6398989 und US 4279579 sowie in den Broschüren "Sandvik - Ihr Partner in der Schmelzengranulierung", PS-442/GER 10.2003 und "Sandvik Process Systems - Ihr Partner in industrieller Verfahrenstechnik", PS-400 GER 2.2011 jeweils herausgegeben durch die Sandvik-Gruppe (www.smt.sandvik.com) beschrieben, besonders bevorzugt unter Verwendung der in diesen Dokumenten angegebenen Apparaturen. Ganz besonders bevorzugt erfolgt die erfindungsgemäße Verwendung mit einer wie in der schematischen Darstellung auf Seite 13 der Broschüre "Sandvik - Ihr Partner in der Schmelzengranulierung", PS-442/GER 10.2003 dargestellten Maschine. Auf die vorgenannten Dokumente wird bezüglich der verwendeten Apparaturen und prinzipiellen Verfahrensweise ausdrücklich verwiesen.

Bei der erfindungsgemäßen Verwendung wird vorzugsweise ein Stahlbandkühler eingesetzt. Eine Schmelze des zu granulierenden Stoffes wird vorzugsweise auf das Stahlband aufgebracht, wobei die Schmelze auf dem Stahlband, durch eine bevorzugte Kühlung des Stahlbands von unten Mittels eines Kühlmittels, vorzugsweise Wasser, unter die Schmelztemperatur bzw. die Erstarrungstemperatur abgekühlt wird und somit erstarrt.

Vorzugsweise wird das erfindungsgemäße Trennmittel vor dem Aufbringen der Schmelze auf das Stahlband aufgebracht. Das Aufbringen des Trennmittels kann z. B. durch Aufsprühen des Trennmittels auf das Stahlband erfolgen. Die Menge des Trennmittels kann in weiten Bereichen frei gewählt werden.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

Die Wirkungsweise der vorliegenden Erfindung wurde in einem praxisnahen Test überprüft und gegen herkömmlich eingesetzte organomodifizierte Siloxane und Silikonölemulsionen verglichen. Dabei wurde mit einer Laboranlage (der Firma SANDVIK) gearbeitet, die einen Rotoformer^{®} und ein wassergekühltes Stahlband enthält (Rotoform System). Aus dem eingesetzten Trennmittelbestandteil wurde eine 14 Gew.-%ige wässrige Lösung(Mischung) als Trennmittel erzeugt, die kontinuierlich auf das Stahlband gesprüht wurde. Die Einsatzstoffe und die Beschreibung der Trennleistung können Tabelle 1 entnommen werden.

### Herstellung eines erfindungsgemäßen organo modifizierten Siloxans

Eine Mischung aus 28 Gew.-% SiH-funktionellem Polydimethylsiloxan (mit N = ca. 50 und 0,27 Gew.-% Wasserstoff) wurde vorgelegt. Dazu gab man 22,5 Gew.-% eines mit Allylalkohol gestarteten Copolymers, bestehend aus 48 Gew.-% Ethylenoxideinheiten und 46% Gew.-% Propylenoxideinheiten, hergestellt nach dem Stand der Technik durch eine KOH-katalysierte Umsetzung. Ferner wurden 36 Gew.-% eines mit Allylalkohol gestarteten Copolymers, bestehend aus 72 Gew.-% Ethylenoxideinheiten und 24 Gew.-% Propylenoxideinheiten dazugegeben und 13,5 Gew.-% eines mit Allylalkohol gestarteten Copolymers, bestehend aus 91 Gew.-% Ethylenoxid dazugegeben. Unter Rühren wurde auf 90 °C aufgeheizt. Es wurden 5 ppm Platin in Form eines Platin-Katalysator (Hexachloridoplatinsäure), zugegeben. Die Umsatzkontrolle durch Bestimmung des SiH-Werts (gasvolumetrische Bestimmung) ergab nach 5 h 99,5 % SiH-Umsatz.

### Testbedingungen:

Bandgeschwindigkeit: 11,25 m/min
Rotofomergeschwindigkeit: 12 m/min
Schwefeltemperatur: 145°C
Kühlwassertemperatur: 22,2°C
Stahlbandbreite: 150 mm
Kühllänge des Förderbands: 2,4 m
Trennmittel: Verbrauch ca. 0,02 g Aktivsubstanz, welche 14%ig verdünnt ist pro kg Schwefel

**Tabelle 1: Trennmittelbestandteil und Testergebnisse**

| Trennmittelbestandteil | Beschreibung der Trennleistung |
|---|---|
| Eine 14 Gew.-%ig e wässrige Siliconölemulsion aus einem Polydimethylsiloxan von Dow Coming mit der Bezeichnung DC 200 und einer Viskosität von 20 cSt. | Keine leichte Trennung, Granulate sind Ellipsenförming deren Kanten leicht brechen. Rückstände des Trennmittels bauen sich auf. |
| Eine auf 14 Gew.-% verdünnte wässrige Emulsion des Trennmittels IPAC SRB PLUS der Firma Sabah (Das Produkt IPAC SRB PLUS stellt eine 75%ige Polydimethylsiloxanemulsion dar). | Keine leichte Trennung, Granulate sind Ellipsenförming deren Kanten leicht brechen. Rückstände des Trennmittels bauen sich auf. |
| 14 Gew.-%ige wässrige Lösung eines nicht erfindungsgemäßen Polyethersiloxans gemäß dem Standes der Technik, TEGOPREN® 5863, der Evonik Goldschmidt GmbH mit der Struktur der Formel (I) mit N=48, a=46, b=2, c=2, d=0, R1 ein Allylalkohol gestarteter Polyetherrest der Formel (II) mit f=11 und g=14 und R2 ein Allylalkohol gestarteter Polyetherrest der Formel (II) mit f=36 und g=38. | Erst leichte Trennung, welche nach 5 Minuten erschwert wird. Oft werden von einer kugeligen Form abweichende Schmelzgranulate, häufiger flache Körper erhalten. |
| Erfindungsgemäßes Produkt der Formel (I) mit N = 50, a = 40, b=3, c=4, d=3, R1 ein Allylalkohol gestarteter Polyetherrest der Formel (II) mit f=11 und g=8, R2 ein Allylalkohol gestarteter Polyetherrest der Formel (II) mit f=20 und g=5 und R3 ein Allylalkohol gestarteter Polyetherrest der Formel (II) mit f=13 und g=0. | Sehr leichte Trennung, keine Verschlechterung der Trennleistung nach 5 Minuten, keine Rückstände. Granulate weisen gleichmäßige Kugelform auf. |

Wie Tabelle 1 entnommen werden kann, weisen erfindungsgemäße organomodifizierte Polysiloxane deutlich bessere Trenneigenschaften auf, als die bisher aus dem Stand der Technik bekannten Trennmittel bzw. Trennmittelbestandteile.

## Patentansprüche

1. Verwendung von organomodifizierten Polysiloxanen der Formel (I) 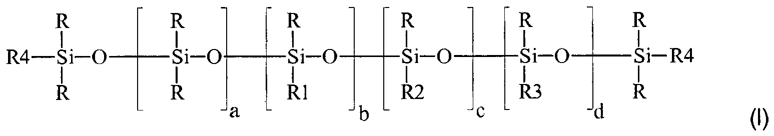 wobei
N = a + b + c + d + 2 = 20 bis 210, bevorzugt 30 bis 100, insbesondere 40 - 60
a = 15 bis 205, bevorzugt 35 bis 45,
b = 1 bis 12, bevorzugt 1 bis 8, insbesondere 2 bis 6
c = 1 bis 12, bevorzugt 1 bis 8, insbesondere 2 bis 6
d = 1 bis 12, bevorzugt 1 bis 8, insbesondere 2 bis 6
sind,
die Reste R unabhängig voneinander gleiche oder verschiedene, aliphatische oder aromatische Kohlenwasserstoffreste mit 1 bis 10C-Atomen sind, vorzugsweise Methylreste,
die Reste R4 unabhängig voneinander gleiche oder verschiedene Reste R, R1, R2 oder R3 sind,
die Reste R1, R2 und R3 unabhängig voneinander verschiedene Polyetherreste der allgemeinen Formel (II)sind 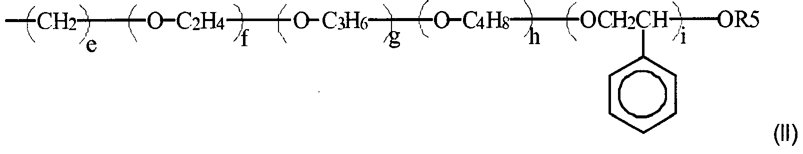 mit
e 3 bis 11, vorzugsweise 3,
f 6 bis 30, vorzugsweise 10 bis 30,
g 0 bis 15, vorzugsweise 0 bis 10,
h 0 bis 5,
i 0 bis 5,
R5 = unabhängig voneinander gleich oder verschieden und bedeuten Methyl-, Acetyl- oder Wasserstoffrest,
vorzugsweise mit der Maßgabe, dass das Molekulargewicht des Polyetherrests der Formel (II) größer als 200 g/mol, vorzugsweise von größer 400 g/mol bis 2000 g/mol und der Anteil an Ethylenoxid größer als 45 Massen % im Polyether ist, und der Massenprozentuale Anteil an Ethylenoxid im Polyetherrest R2 mindestens 9 Massen-% größer als der prozentuale Anteil an Ethylenoxid im Polyetherrest R1 jeweils bezogen auf die Polyetherreste der Formel (II) ist, wobei die Reste der Formel (11) jeweils statistisch, gradientartig oder blockartig aufgebaut sein können,
als Trennmittel oder Trennmittelbestandteil in der Schmelzgranulierung.

2. Verwendung nach Anspruch 1, **dadurch gekennzeichnet, dass** die organomodifizierten Polysiloxane der Formel (I) in Form von wässrigen Lösungen als Trennmittel eingesetzt werden.

3. Verwendung nach Anspruch 2, **dadurch gekennzeichnet, dass** die wässrigen Lösungen von 0,5 bis 50 Gew.-% an organomodifizierten Polysiloxanen der Formel (I) aufweisen.

4. Verwendung nach zumindest einem der Ansprüche 1 bis 3, **dadurch gekennzeichnet, dass** die organomodifizierten Polysiloxane einen Trübungspunkt von 35°C bis 60 °C aufweisen.

5. Verwendung nach zumindest einem der Ansprüche 1 bis 4, **dadurch gekennzeichnet, dass** bei der Schmelzgranulierung Schwefel granuliert wird.

6. Verwendung nach zumindest einem der Ansprüche 1 bis 5, **dadurch gekennzeichnet, dass** bei der Schmelzgranulierung ein Stahlbandkühler eingesetzt wird.

7. Verwendung nach zumindest einem der Ansprüche 1 bis 6, **dadurch gekennzeichnet, dass** ein Stahlband eingesetzt wird und das Trennmittel vor dem Aufbringen der Schmelze auf das Stahlband auf das Stahlband aufgebracht wird.

## Claims

1. Use of organomodified polysiloxanes of the formula (I) 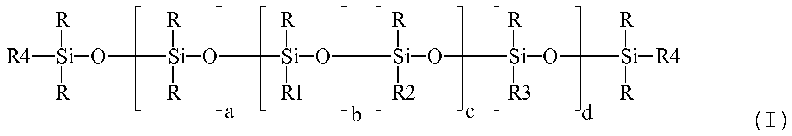 where
N = a + b + c + d + 2 = 20 to 210, preferably 30 to 100, especially 40 - 60,
a = 15 to 205, preferably 35 to 45,
b = 1 to 12, preferably 1 to 8, especially 2 to 6,
c = 1 to 12, preferably 1 to 8, especially 2 to 6,
d = 1 to 12, preferably 1 to 8, especially 2 to 6,
the R radicals are each independently identical or different, aliphatic or aromatic hydrocarbyl radicals having 1 to 10 carbon atoms, preferably methyl radicals,
the R4 radicals are each independently identical or different R, R1, R2 or R3 radicals,
the R1, R2 and R3 radicals are each independently different polyether radicals of the general formula (II) 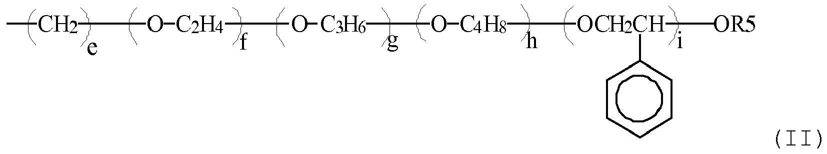 where
e is 3 to 11, preferably 3,
f is 6 to 30, preferably 10 to 30,
g is 0 to 15, preferably 0 to 10,
h is 0 to 5,
i is 0 to 5,
R5 are independently the same or different and are each a methyl, acetyl or hydrogen radical,
preferably with the proviso that the molecular weight of the polyether radical of the formula (II) is greater than 200 g/mol, preferably from greater than 400 to 2000 g/mol, and the proportion of ethylene oxide is greater than 45% by mass in the polyether, and the percentage by mass of ethylene oxide in the polyether radical R2 is at least 9% by mass greater than the percentage of ethylene oxide in the polyether radical R1, based in each case on the polyether radicals of the formula (II), where the radicals of the formula (II) may each be formed randomly, in a gradient or in blocks,
as a release agent or release agent constituent in melt granulation.

2. Use according to Claim 1, **characterized in that** the organomodified polysiloxanes of the formula (I) are used as release agents in the form of aqueous solutions.

3. Use according to Claim 2, **characterized in that** the aqueous solutions comprise from 0.5 to 50% by weight of organomodified polysiloxanes of the formula (I).

4. Use according to at least one of Claims 1 to 3, **characterized in that** the organomodified polysiloxanes have a cloud point from 35°C to 60°C.

5. Use according to at least one of Claims 1 to 4, **characterized in that** sulphur is granulated in the melt granulation.

6. Use according to at least one of Claims 1 to 5, **characterized in that** a steel belt cooler is used in the melt granulation.

7. Use according to at least one of Claims 1 to 6, **characterized in that** a steel belt is used and the release agent is applied to the steel belt before the melt is applied to the steel belt.

## Revendications

1. Utilisation de polysiloxanes à modification organique de formule (I) 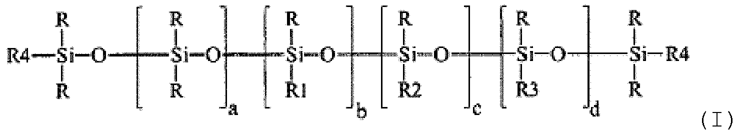 dans laquelle
N = a + b + c + d + 2 = 20 à 210, de préférence 30 à 100, en particulier 40-60,
a = 15 à 205, de préférence 35 à 45,
b = 1 à 12, de préférence 1 à 8, en particulier 2 à 6
c = 1 à 12, de préférence 1 à 8, en particulier 2 à 6
d = 1 à 12, de préférence 1 à 8, en particulier 2 à 6,
les radicaux R représentent, indépendamment les uns des autres, des radicaux hydrocarbonés identiques ou différents, aliphatiques ou aromatiques, ayant de 1 à 10 atomes de carbone, de préférence des radicaux méthyle,
les radicaux R4 sont, indépendamment l'un de l'autre, des radicaux R, R1, R2 ou R3 identiques ou différents, les radicaux R1, R2 et R3 sont des radicaux polyéther différents chacun indépendamment des autres, de formule générale (II) 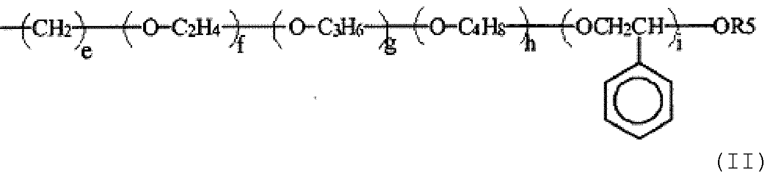 où
e vaut 3 à 11, de préférence 3,
f vaut 6 à 30, de préférence 10 à 30,
g vaut 0 à 15, de préférence 0 à 10,
h vaut 0 à 5,
i vaut 0 à 5,
R5 indépendamment les uns des autres sont identiques ou différents et représentent un atome d'hydrogène ou le radical méthyle ou acétyle,
de préférence étant entendu que la masse moléculaire du radical polyéther de formule (II) est supérieure à 200 g/mole, de préférence vaut de plus de 400 g/mole à 2 000 g/mole et la proportion d'oxyde d'éthylène est supérieure à 45 % en masse dans le polyéther, et la proportion en pourcentage en masse d'oxyde d'éthylène dans le radical polyéther R2 est supérieure d'au moins 9 % en masse à la proportion en pourcentage d'oxyde d'éthylène dans le radical polyéther R1, chaque fois par rapport aux radicaux polyéther de formule (II), les radicaux de formule (II) pouvant être chaque fois de structure statistique, en gradient ou séquencée,
en tant qu'agent de séparation ou composant d'agent de séparation dans la granulation en masse fondue.

2. Utilisation selon la revendication 1, **caractérisée en ce qu'**on utilise en tant qu'agent de séparation les polysiloxanes à modification organique de formule (I), sous forme de solutions aqueuses.

3. Utilisation selon la revendication 2, **caractérisée en ce que** les solutions aqueuses comportent de 0,5 à 50 % en poids de polysiloxanes à modification organique de formule (I).

4. Utilisation selon au moins l'une quelconque des revendications 1 à 3, **caractérisée en ce que** les polysiloxanes à modification organique présentent un point de trouble de 35 °C à 60 °C.

5. Utilisation selon au moins l'une quelconque des revendications 1 à 4, **caractérisée en ce que** dans la granulation en masse fondue on granule du soufre.

6. Utilisation selon au moins l'une quelconque des revendications 1 à 5, **caractérisée en ce que** dans la granulation en masse fondue on utilise un refroidisseur sur bande en acier.

7. Utilisation selon au moins l'une quelconque des revendications 1 à 6, **caractérisée en ce qu'**on utilise une bande en acier et on applique l'agent de séparation sur la bande en acier avant l'application de la masse fondue sur la bande en acier.
